# DEMANDE DE BREVET EUROPEEN

(11) **EP 2 837 873 A2**
(43) Date de publication de la demande: **18.02.2015**
(21) Numéro de dépôt: 14173404.6
(22) Date de dépôt: 23.06.2014
(51) Int. Cl.: F17C 5/06, F17C 5/00, F17C 7/00, F17C 9/00, F17C 13/02

(54) **Procédé et installation de production de gaz sous pression**

(30) Priorité: 29.07.2013 FR 1357459
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: Aigouy, Gérald, 73110 La Croix de la Rochette (FR); Bednarski, David, 91940 Gometz-Le-Châtel (FR); Paufique, Cyrille, 69002 Lyon (FR); Wagner, Marc, 94100 Saint Maur des Fosses (FR)
(74) Mandataire: De Cuenca, Emmanuel Jaime

(57) **Abrégé**

Procédé et installation de production de gaz sous pression à une température (Tf) déterminée et une pression (Tf) déterminée à partir d'un réservoir (1) de gaz liquéfié stocké à température (T0) cryogénique, dans lequel du gaz liquéfié est extrait du réservoir (1) puis est réchauffé par échange thermique avec au moins un organe (2, 3) de réchauffage, caractérisé en ce que le au moins un organe (2) de réchauffage comprend un dispositif (2) moteur soumettant un gaz de travail à un cycle de travail thermodynamique de type Stirling ou Ericsson, le fluide de travail générant lors de son cycle de travail des oscillations de pression dans le dispositif (2) moteur, le fluide de travail générant également lors de son cycle de travail des calories au niveau une première extrémité (12) du dispositif (2) moteur et absorbant des calories au niveau d'une seconde extrémité (22) du dispositif (2) moteur, et en ce que le gaz de travail est mis en liaison fluidique avec un mécanisme (4, 5) de conversion en énergie électrique desdites oscillations de pression du gaz de travail

## Description

La présente invention concerne un procédé et une installation de production de gaz sous pression.

L'invention concerne plus particulièrement un procédé de production de gaz sous pression à une température déterminée et une pression déterminée à partir d'un réservoir de gaz liquéfié stocké à température cryogénique, dans lequel du gaz liquéfié est extrait du réservoir puis est réchauffé par échange thermique avec au moins un organe de réchauffage.

L'invention concerne notamment un procédé ou une installation de production et de distribution de gaz, notamment de gaz comprimé, à partir d'au moins un réservoir cryogénique contenant du gaz liquéfié. L'invention peut concerner plus particulièrement un procédé ou une installation de fourniture de gaz à des températures non cryogéniques (c'est-à-dire entre -80°C à la température ambiante) à partir de réservoirs cryogéniques.

Les utilisateurs industriels ayant besoin de quantités relativement importantes de gaz produisent généralement leur gaz à partir de stockages cryogéniques. En effet, les réservoirs cryogéniques permettent de stocker des quantités massiques de gaz relativement importantes. Des gaz de l'air comme l'azote, l'oxygène, et l'argon ont une température de stockage cryogénique comprise entre de 80K et 110K et présentent donc une capacité de densification importante à l'état liquide.

Le réservoir cryogénique alimente une installation de fourniture de gaz aux températures non cryogéniques déterminées (par exemple entre -40°C et 20°C) et à des pressions déterminées. Selon les applications, le gaz peut ainsi être produit à une pression proche de la pression atmosphérique ou bien à des nivaux de pression plus élevés, par exemple compris entre 100 et 800bar, notamment entre 200 et 500bar.

Ainsi, de l'hydrogène stocké sous forme cryogénique (par exemple à 20K) peut fournir de l'hydrogène à très haute pression typiquement (de 500 à 800bar par exemple) à des véhicules automobiles fonctionnant avec des piles à combustible.

Pour ce faire, le gaz stocké à des températures cryogéniques est réchauffé et vaporisé par l'installation de l'usager, typiquement à l'aide d'évaporateurs et réchauffeurs atmosphériques.

Ces stockages cryogéniques permettent de diminuer les besoins en logistique de transport et augmentent l'autonomie des consommateurs, mais nécessitent une étape de liquéfaction et de maintient du fluide aux températures cryogéniques qui sont coûteuses dans le bilan énergétique et économique de l'installation.

Un but de la présente invention est de pallier tout ou partie des inconvénients de l'art antérieur relevés ci-dessus.

A cette fin, le procédé selon l'invention, par ailleurs conforme à la définition générique qu'en donne le préambule ci-dessus, est essentiellement caractérisé en ce que le au moins un organe de réchauffage comprend un dispositif moteur soumettant un gaz de travail à un cycle de travail thermodynamique de type Stirling ou Ericsson, le fluide de travail générant lors de son cycle de travail des oscillations de pression dans le dispositif moteur, le fluide de travail générant également lors de son cycle de travail des calories au niveau une première extrémité du dispositif moteur et absorbant des calories au niveau d'une seconde extrémité du dispositif moteur, et en ce que le gaz de travail est mis en liaison fluidique avec un mécanisme de conversion en énergie électrique desdites oscillations de pression du gaz de travail.

Ceci fournit à l'utilisateur, en lieu et place de son installation d'évaporation et réchauffage classique, une installation produisant simultanée du chauffage et de l'électricité.

L'énergie électrique produite peut être restituée à un réseau ou peut être utilisée directement pour les besoins de l'utilisateur.

Par ailleurs, des modes de réalisation de l'invention peuvent comporter l'une ou plusieurs des caractéristiques suivantes :
- le dispositif moteur comprend au moins l'un parmi : un détendeur de type thermo-acoustique, une machine de type Stirling, une machine de type Ericsson, un tube à gaz pulsé,
- le gaz liquéfié extrait du réservoir est réchauffé par échange thermique avec la première extrémité du dispositif moteur,
- l'organe de réchauffage comprend un dispositif moteur soumettant le gaz de travail à un cycle de travail thermodynamique de type Stirling ou Ericsson fermé c'est-à-dire que le gaz de travail n'est pas alimenté en gaz provenant du réservoir et le dispositif moteur ne cède pas de gaz de travail pour la production de gaz sous pression à la température déterminée et à la pression déterminée,
- l'organe de réchauffage comprend un dispositif moteur soumettant le gaz de travail à un cycle de travail thermodynamique de type Stirling ou Ericsson ouvert, c'est-à-dire que le gaz de travail est alimenté en gaz issu du réservoir et au moins une partie du gaz sous pression produit à une température déterminée et une pression déterminée provient du gaz de travail du dispositif moteur,
- des calories sont fournies au dispositif de travail au niveau de la seconde extrémité du dispositif moteur à partir d'une source chaude comprenant l'un au moins parmi : l'air ambiant, un organe de réchauffage,
- le gaz liquéfié est sélectivement pressurisé à une pression déterminé comprise entre 5 et 15bar avant son échange thermique avec le au moins un organe de réchauffage,
- la source chaude comprend au moins l'un parmi : un accumulateur de chaleur, un concentrateur solaire, un radiateur ventilé par l'air ambiant, une source de chaleur par combustion de gaz type méthane ou autre combustible,
- le mécanisme de conversion en énergie électrique desdites oscillations de pression du gaz de travail comprend un piston en communication fluidique avec le gaz de travail, ledit piston étant relié à un circuit électromagnétique pour convertir en énergie électrique les déplacements du piston générés par les oscillations de pression du gaz de travail,
- le mécanisme de conversion en énergie électrique desdites oscillations de pression du gaz de travail comprend un alternateur électromécanique et un convertisseur de puissance électrique,
- le mécanisme de conversion comprend au moins une pièce électromécaniques parmi : un rotor, un stator, une bobine inductive refroidie à une température égale ou inférieure à la température du gaz de travail dans l'organe de réchauffage,
- le gaz de travail comprend au moins l'un parmi : de l'hélium, de l'hydrogène, de l'azote, ou tout autre gaz pouvant rester à l'état gazeux à la température du stockage cryogénique,
- le réservoir contient du gaz à une température cryogénique comprise entre 4K (hélium liquide) et 110K (gaz de l'air) et une pression comprise entre un bar et trente bar,
- le réservoir contient un gaz liquéfié choisi parmi : de l'azote, de l'oxygène, de l'hydrogène, de l'hélium, de l'argon, de l'air,
- le circuit de soutirage comprend au moins une vanne de répartition pour d'une part le transfert sélectif de fluide du circuit de soutirage vers le dispositif de travail via la conduite d'échange et, d'autre part, le transfert de fluide de travail du dispositif de travail vers le circuit de soutirage via la conduite d'échange,
- le circuit de soutirage comprend deux une vanne de répartition, par exemple des vannes commandées notamment des vannes rotatives,
- le circuit de soutirage comprend au moins une conduite de dérivation sélective de l'organe de réchauffage supplémentaire,
- le circuit de soutirage comprend au moins un stockage tampon pour stocker du gaz sous pression produit par l'installation,
- le circuit de soutirage comprend un organe de compression du fluide en amont du au moins un organe de réchauffage comprenant au moins l'un parmi : un vaporiseur dans le réservoir, un compresseur ou une pompe en sortie de réservoir,
- le dispositif moteur comprend une machine de type Stirling ou Ericsson comprenant un régénérateur et un volume pour accueillir les pulsations générées par les oscillations de pression du gaz de travail, notamment un tube à pulsations,
- le dispositif moteur comprend au moins un refroidisseur à tube pulsé comportant un tube à gaz pulsé associé à un régénérateur, le ou les refroidisseur à tube pulsé comprenant au moins l'un parmi : un refroidisseur à tube pulsé du type concentrique, un refroidisseur à tube pulsé du type en ligne , un refroidisseur à tube pulsé du type « en U »,
- le au mois un organe de réchauffage comprend trois dispositifs moteur disposés en série et soumettant chacun un gaz de travail à un cycle de travail thermodynamique de type Stirling ou Ericsson, le fluide de travail générant lors de chaque cycle de travail des oscillations de pression dans le dispositif moteur concerné, le fluide de travail générant lors de chaque cycle de travail des calories au niveau une première extrémité du dispositif moteur considéré et absorbant des calories au niveau d'une seconde extrémité du dispositif moteur considéré, le gaz de travail de l'un au moins des dispositifs moteur étant mis en liaison fluidique avec un mécanisme de conversion en énergie électrique respectif desdites oscillations de pression du gaz de travail,
- les dispositifs moteur disposés en série sont chacune du type à fonctionnement en mode « double effet » c'est-à-dire les oscillations de pression de pression d'un dispositif moteur sont transmises à un autre dispositif moteur pour générer des oscillations à ce dernier, par exemple une liaison fluidique transmet des oscillations de pression d'un dispositif moteur au mécanisme de conversion (piston) d'un autre piston moteur avec un décalage dans le cycle de compression-détente du fluide de travail, par exemple avec un décalage équivalent à un tiers ou un quart du cycle complet (c'est-à-dire respectivement 120 degrés ou 90 degrés si le cycle complet fait 360 degrés)
- trois dispositifs moteur sont disposés en série fonctionnement de type à double effet avec un déphasage de 120°,
- le gaz liquéfié extrait du réservoir est réchauffé par échange thermique avec la première extrémité de l'un au moins des dispositifs (2) moteur disposés en série,

... L'invention concerne également une installation de production de gaz sous pression à une température déterminée et une pression déterminée comprenant un réservoir de gaz liquéfié stocké à température cryogénique, un circuit de soutirage de fluide du réservoir comprenant au moins un organe de réchauffage, le au moins un organe de réchauffage comprenant un dispositif moteur soumettant un gaz de travail à un cycle de travail thermodynamique de type Stirling ou Ericsson, le fluide de travail générant lors de son cycle de travail des oscillations de pression dans le dispositif moteur, le fluide de travail générant par ailleurs lors de son cycle de travail des calories au niveau une première extrémité du dispositif moteur et absorbant des calories au niveau d'une seconde extrémité du dispositif moteur, le circuit de soutirage de fluide du réservoir comportant une portion en échange thermique avec la première extrémité du dispositif moteur, l'installation comprenant, mis en relation avec le gaz de travail, un mécanisme de conversion en énergie électrique des desdites oscillations de pression du gaz de travail.

Par ailleurs, des modes de réalisation de l'invention peuvent comporter l'une ou plusieurs des caractéristiques suivantes :
- le dispositif moteur comprend au moins l'un parmi : un détendeur de type thermo-acoustique, une machine de type Stirling, une machine de type Ericsson, un refroidisseur à tube à gaz pulsé,
- l'organe de réchauffage comprend un dispositif moteur soumettant le gaz de travail à un cycle de travail thermodynamique de type Stirling ou Ericsson fermé, c'est-à-dire que le gaz de travail ne communique pas fluidiquement avec le gaz du circuit de soutirage,
- l'organe de réchauffage comprend un dispositif moteur soumettant le gaz de travail à un cycle de travail thermodynamique de type Stirling ou Ericsson ouvert, c'est-à-dire que le circuit de soutirage comprend au moins une conduite d'échange mettant sélectivement en communication le circuit de soutirage avec le dispositif moteur pour fournir et prélever du gaz de travail,
- l'installation comprend un circuit de réchauffage en échange thermique d'une part avec la seconde extrémité du dispositif moteur et d'autre part avec une source chaude pour transférer sélectivement des calories de la source chaude vers la seconde extrémité du dispositif de travail, la source chaude comprenant l'un au moins parmi : l'air ambiant, un organe de réchauffage,
- le circuit de soutirage comprend un organe de réchauffage supplémentaire distinct du dispositif moteur tel qu'un vaporiseur ou un réchauffeur atmosphérique,
- le circuit de soutirage comprend détendeur de pression pour abaisser la pression du gaz à une valeur déterminée fixe ou réglable,
- l'organe de réchauffage comprend plusieurs dispositifs moteur disposés en série soumettant chacun du gaz de travail à un cycle de travail thermodynamique de type Stirling ou Ericsson respectif de type ouvert ou fermé,

Le procédé et l'installation correspondante peuvent donc utiliser avantageusement des sources chaudes d'énergies « gratuites » tel que la température atmosphérique, disponible de jour comme de nuit, et éventuellement l'énergie solaire disponible durant la journée. Le procédé et l'installation permettent une génération d'électricité et de chaleur qui peut fonctionner de jour comme de nuit avec des sources d'énergie renouvelables, avec une performance de production électrique accrue la journée du fait de l'énergie solaire disponible.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue schématique et partielle illustrant la structure et le fonctionnement d'un premier exemple d'installation de production de gaz selon l'invention,
- les figures 2 et 3 représentent des vues schématiques et partielles illustrant la structure et le fonctionnement de, respectivement un deuxième et un troisième exemples d'installation de production de gaz selon l'invention,
- la figure 4 représente une vue schématique et partielle illustrant la structure et le fonctionnement d'un quatrième exemple d'installation de production de gaz selon l'invention, en vue de fournir par exemple un gaz carburant à un véhicule,
- les figures 5 et 6 représentent des vues schématiques et partielles illustrant la structure et le fonctionnement de, respectivement un cinquième et un sixième exemples d'installation de production de gaz selon l'invention utilisant plusieurs dispositifs moteur en série,
- les figures 7 et 8 représentent des vues schématiques et partielles illustrant la structure et le fonctionnement de, respectivement un septième et un huitième exemples d'installation de production de gaz selon l'invention utilisant plusieurs dispositifs moteur en série, en vue par exemple de remplir des réservoir de carburant de véhicules,
- les figures 9 à 12 représentent des vues schématiques et partielles illustrant respectivement la structure et le fonctionnement de quatre installations de production d'électricité et d'échange thermique pouvant être mis en oeuvre selon l'invention.

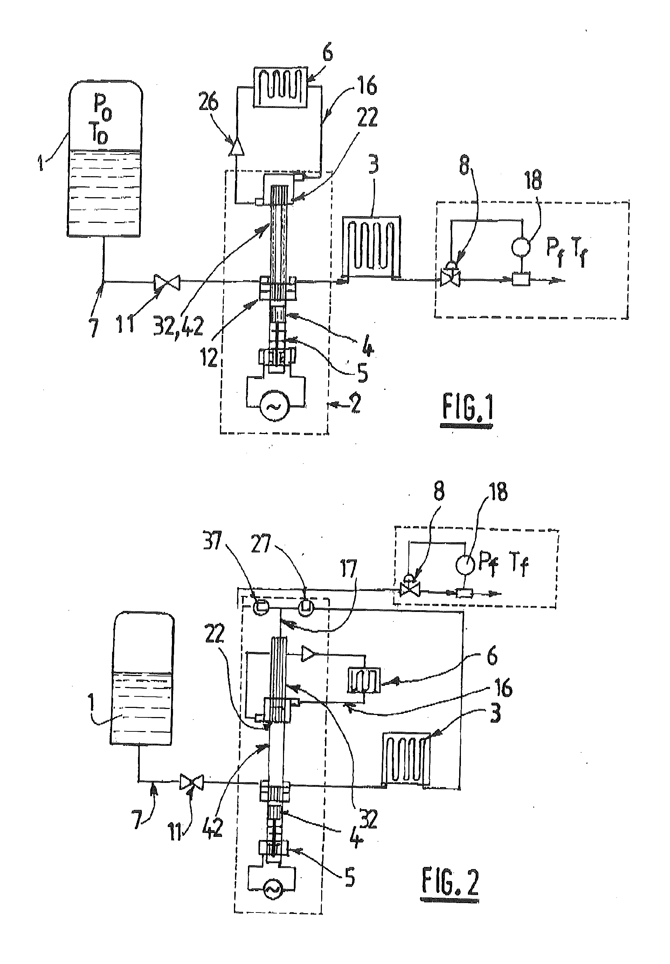

La figure 1 illustre un premier exemple d'installation de production de gaz sous pression à une température Tf déterminée (par exemple 20°C) et une pression Pf déterminée (par exemple 7bar) à partir d'un réservoir 1 de gaz liquéfié stocké à température TO cryogénique (par exemple -175°C et une pression de 9 bar).

L'installation comporte un circuit 7 de soutirage de fluide du réservoir 1. Ce circuit 7 de soutirage comporte une conduite de soutirage de liquide comprenant en série une vanne 11 de soutirage et un premier organe 2 de réchauffage. Le premier organe 2 de réchauffage est constitué d'un dispositif 2 moteur soumettant un gaz de travail à un cycle de travail thermodynamique de type Stirling ou Ericsson. Le gaz de travail est par exemple de l'hélium soumis à une pression maximale ou moyenne dans son cycle de travail (typiquement entre 20bar et 80bar).

Le dispositif 2 moteur comprend au moins l'un parmi : un détendeur de type thermo-acoustique, une machine de type Stirling, une machine de type Ericsson, un refroidisseur à tube à gaz pulsé ou tout autre dispositif équivalent.

Dans l'exemple de la figure 1, le dispositif 2 moteur a une structure de refroidisseur « à tube pulsé du type concentrique ». C'est-à-dire que le tube à gaz pulsé comporte un tube 32 régénérateur et un tube 42 à pulsations concentriques, les première 12 et seconde 22 extrémités étant situées respectivement aux deux extrémités de cette portion concentrique.

Classiquement, le fluide de travail génère lors de son cycle de travail thermodynamique des oscillations de pression dans le dispositif 2 moteur. De façon classique également, le fluide de travail génère lors de son cycle de travail des calories au niveau une première extrémité 12 du dispositif 2 moteur et absorbe des calories au niveau d'une seconde extrémité 22 du dispositif 2 moteur. Le circuit 7 de soutirage comprend une portion en échange thermique avec la première extrémité 12 du dispositif 2 moteur. De cette façon, le dispositif moteur assure un réchauffage du fluide soutiré du réservoir 1 cryogénique. La première extrémité 12 peut fournir une puissance de réchauffage comprise par exemple entre 1 kW et 30kW. Par exemple, un fluide tel que de l'azote ou soutiré à une température de -175°C ou -171°C peut être vaporisé après échange thermique avec cette première extrémité 12 du dispositif 2 moteur (par exemple à une température comprise entre -160°C et -140°C).

Pour assurer le cycle de travail thermodynamique, la seconde extrémité 22 du dispositif 2 moteur absorbe des calories à partir d'une source dite « chaude » par exemple l'air ambiant autour de l'installation via un circuit de transfert. Par exemple, un circuit 16 de réchauffage peut être prévu pour transférer des calories de la source chaude 6 vers la seconde extrémité 22 du dispositif 2 moteur. Par exemple, ce circuit de réchauffage peut comporter une boucle 16 de circulation d'un fluide caloporteur (munie par exemple d'une pompe 26) pour transférer sélectivement des calories de la source chaude 6 vers la seconde extrémité 22 du dispositif 2 de travail. La source chaude peut comprendre au moins parmi : l'air ambiant, un organe de réchauffage tel qu'un concentrateur solaire, ou tout autre source de calorie appropriée.

De plus, l'installation comprend, mis en relation avec le gaz de travail, un mécanisme 4, 5 de conversion en énergie électrique des desdites oscillations de pression du gaz de travail.

Le mécanisme 4, 5 de conversion en énergie électrique desdites oscillations de pression du gaz de travail comprend par exemple un piston 4 dont la face dite « antérieure » est en communication fluidique avec le gaz de travail. Le piston 4 est relié par sa face opposée dite « postérieure » à un circuit électromagnétique pour convertir en énergie électrique les déplacements mécaniques du piston 4 générés par les oscillations de pression du gaz de travail.

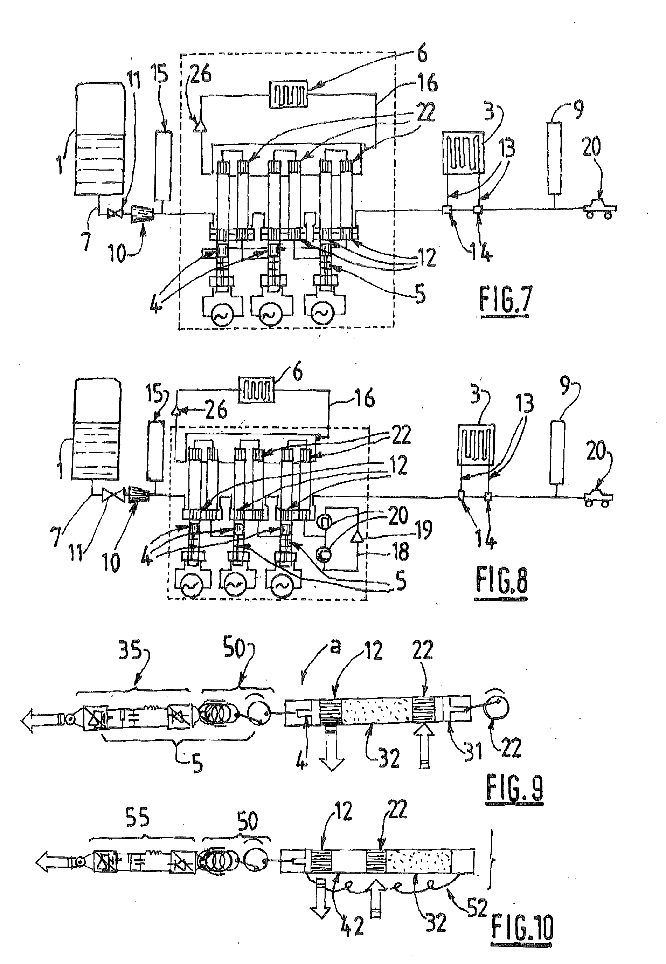

La figure 9 illustré schématiquement le dispositif moteur 2 (machine de type Stirling par exemple) avec ses première 12 et seconde extrémités 22, le piston 4 couplé au circuit électromagnétique. Ce circuit 5 électromagnétique comprend par exemple un alternateur 50 électromécanique et un convertisseur 55 de puissance électrique.

De préférence, le mécanisme 4, 5 de conversion comprend au moins une pièce électromécaniques parmi : un rotor, un stator, une bobine inductive refroidie à une température égale ou inférieure à la température du gaz de travail dans l'organe de réchauffage.

Le dispositif 2 moteur de l'installation de la figure 1 et du type à « circuit fermé » c'est-à-dire qu'il soumet le fluide de travail à un cycle de travail thermodynamique de type Stirling ou Ericsson fermé. C'est-à-dire que le gaz de travail n'est pas alimenté en gaz provenant du réservoir 1 et le dispositif 2 moteur ne cède pas de gaz de travail pour la production de gaz sous pression à la température Tf déterminée et à la pression Tf déterminée (pas de mélange entre le gaz de travail et le gaz produit à partir du réservoir 1).

En aval du dispositif 2 moteur, le circuit 7 de soutirage comprend un second organe 3 de réchauffage, par exemple un réchauffeur atmosphérique (c'est-à-dire un échangeur de chaleur conformé pour transférer des calories de l'air extérieur vers le fluide du circuit 7 de soutirage. Avant d'entrer dans le second 3 organe de réchauffage, le fluide peut être partiellement vaporisé. Après son passage dans le second organe 3 de réchauffage, le fluide du circuit 7 est de préférence complètement vaporisé et sa pression peut ensuite être régulée à une pression déterminée Pf par exemple via un détendeur 8 de pression commandé. Par exemple, le détendeur 8 est du type commandé selon une consigne de pression mesurée 18 en aval du détendeur 8. Le gaz à la pression Pf déterminée et la température déterminée Tf peut être fournie à l'application.

La figure 2 illustre une variante de réalisation qui se distingue de la forme de réalisation de la figure 1 uniquement en ce que le dispositif 2 moteur de l'installation de la figure 2 et du type à « circuit ouvert» et en ce que le dispositif moteur a une structure de refroidisseur « à tube pulsé du type en ligne ».

Dans la description qui va suivre, par soucis de concision, les éléments identiques à ceux déjà décrit seront désignés par les mêmes références numériques et ne seront pas décrits plusieurs fois d'un mode de réalisation à l'autre.

Le dispositif 2 moteur l'installation de la figure 2 et du type à « circuit ouvert» c'est-à-dire que, contrairement à l'exemple de la figure 1, le gaz de travail comprend du gaz issu du réservoir 1 et au moins une partie du gaz sous pression produit à une température Tf déterminée et une pression Tf déterminée provient du gaz de travail du dispositif 2 moteur.

Pour ce faire, après son passage dans le second organe 3 de réchauffage, le circuit de soutirage comprend une conduite 17 d'échange et un ensemble de vannes 27, 37 permettant de mettre sélectivement en communication le circuit 7 de soutirage avec l'intérieur du dispositif 2 moteur pour assurer un transfert de gaz entre le circuit 7 de soutirage et l'intérieur du dispositif 2 moteur et inversement. Par exemple deux vannes rotatives 27, 37 sont disposées respectivement en amont et en aval de la jonction entre le circuit 7 de soutirage et la conduite 17 d'échange. Ainsi, le gaz de travail soumis à un cycle de travail thermodynamique dans le dispositif 2 moteur est identique au gaz du réservoir 1. La circulation du gaz issu du réservoir dans le dispositif 2 moteur permet ainsi de récupérer l'énergie de pression de gaz sous forme de détente et d'améliorer l'efficacité du dispositif.

Le dispositif 2 moteur de la figure 1 a de plus une structure de refroidisseur « à tube pulsé du type en ligne », c'est-à-dire que le tube 42 à pulsations et le tube régénérateur 32 sont disposés en série et séparés par la seconde extrémité 2. Bien entendu, l'architecture de la figure 2 pourrait être envisagée avec un dispositif 2 moteur conforme à celui de la figure 1 (et inversement).

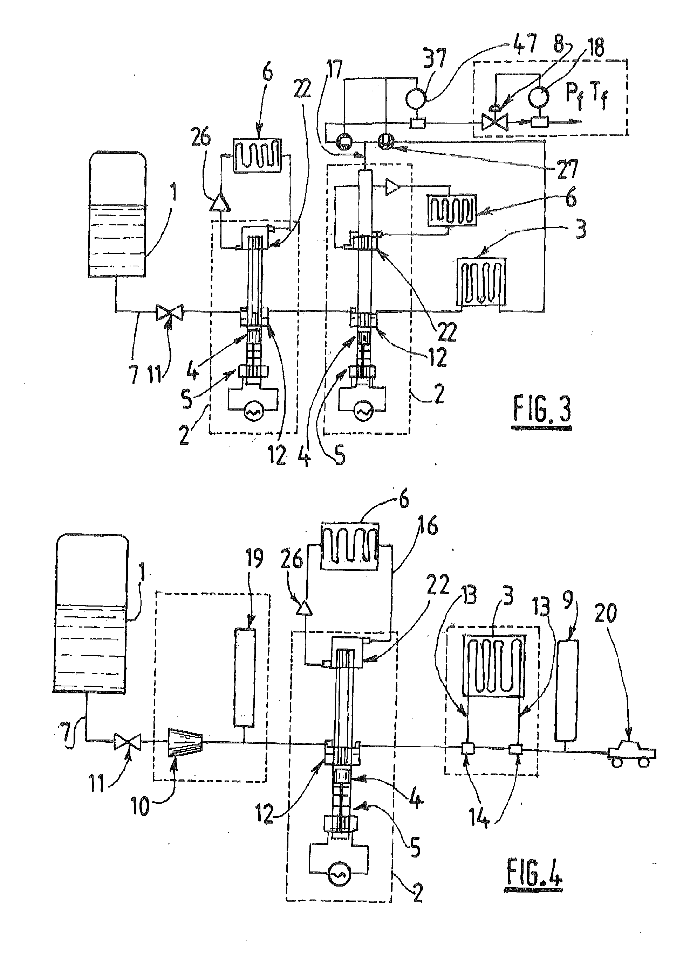

La figure 3 illustre une variante de réalisation qui se distingue de la forme de réalisation de la figure 2 en ce qu'il comporte un dispositif 2 moteur supplémentaire du type à « circuit fermé» disposé en série sur le circuit 7 de soutirage entre la vanne 10 et le dispositif 2 moteur du type à « circuit ouvert». C'est-à-dire que le fluide soutiré du réservoir 1 est réchauffé par échange thermique au niveau de la première extrémité 12 du premier dispositif 2 moteur, puis est réchauffé par échange thermique avec la première extrémité 12 du second dispositif 2 moteur puis est réchauffé ensuite dans le réchauffeur 3 atmosphérique puis ensuite est sélectivement admis et extrait du second dispositif 2 moteur. Le premier dispositif 2 moteur (de type à circuit de travail fermé) est conforme au dispositif 2 moteur de l'installation de la figure 1 tandis que le second dispositif moteur 2 (de type à circuit de travail ouvert) est conforme au dispositif 2 moteur de la figure 2.

Par ailleurs, comme illustré à la figure 3, les deux vannes 27, 37 de commande de la circulation de fluide via la conduite 17 d'échange peuvent être commandées par un asservissement en fonction d'une mesure 47 de pression aval sur le circuit 7 de soutirage.

L'installation selon la figure 3 combine trois organes de réchauffage en série (deux dispositifs 2 moteur et un réchauffeur 3 atmosphérique) permet par exemple de réchauffer un liquide à une température de -175°C (en sortie de réservoir 1) à environ à -125°C (après échange thermique avec le premier 2 dispositif moteur) puis -50°C (après échange thermique avec le second dispositif moteur) puis 10 °C (après passage dans le réchauffeur 3 atmosphérique).

La figure 4 illustre encore une autre variante d'installation particulièrement adaptée au remplissage de réservoirs de gaz sous pression, notamment des réservoirs d'hydrogène gazeux d'automobiles 20.

L'installation de la figure 4 se distingue de l'installation de la figure 1 en ce que le circuit de soutirage 7 comprend, disposés en série entre la vanne 11 de soutirage et le dispositif 2 moteur, une pompe 10 et un réservoir 15 tampon destiné à contenir du liquide cryogénique mis sous pression par la pompe 10.

De plus, l'installation de la figure 4 se distingue également de l'installation de la figure 1 en ce que le circuit de soutirage 7 comprend des conduites de dérivation 13 et des vannes 14 permettant sélectivement de faire circuler ou non le gaz du circuit 7 de soutirage dans le réchauffeur 3 atmosphérique (selon la nécessité de réchauffage). Enfin, l'installation de la figure 4 se distingue également de l'installation de la figure 1 en ce que le circuit de soutirage 7 comporte, en aval du réchauffeur 3 atmosphérique, au mois un réservoir 9 tampon de gaz sous pression destiné à accueillir le gaz vaporisé à haute pression en vue de sa fourniture à un réservoir 14 à remplir. Bien entendu, une ou des vanne et un ou des détenteurs (non représentés par soucis de simplification) peuvent être prévus dans la partie aval du circuit 7 de soutirage pour réguler le débit de gaz à haute pression vers ou depuis le réservoir 9 tampon de gaz.

L'installation de la figure 4 peut être prévue pour délivrer de l'hydrogène gazeux à une pression comprise entre 500 et 900 bar et une température de l'ordre de 0°C à -50°C à partir d'un réservoir 1 d'hydrogène liquide contenant de l'hydrogène liquide à une pression de 3 à 10 bar et une température comprise entre -260 et -200°C par exemple. A l'issu de son réchauffage par échange thermique avec le dispositif 2 moteur, l'hydrogène peut être amené à une température de -80°C par exemple. A l'issu de son réchauffage dans le réchauffeur 3 atmosphérique, l'hydrogène vaporisé peut atteindre une pression de 800bar et une température de -40°C.

L'installation permet la production d'hydrogène gazeux à haute pression et température froide en vue de remplissages rapides de réservoirs d'hydrogène (par exemple jusque 800 bar).

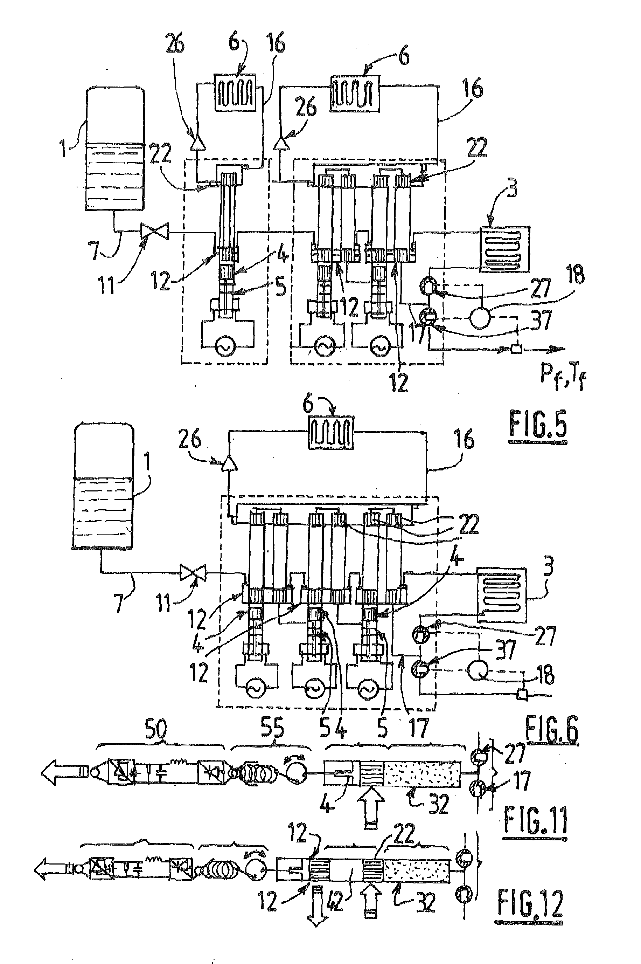

La figure 5 illustre encore une autre variante d'installation de fourniture de gaz.

L'installation de la figure 5 se distingue de l'installation de la figure 1 en ce que le circuit de soutirage 7 comprend, disposés en série entre le dispositif moteur 2 et le réchauffeur 3 atmosphérique, deux dispositifs 2 moteur supplémentaires disposés en série. C'est-à-dire que l'installation comprend trois dispositifs 2 moteurs.

Comme illustré à la figure 5, les deux dispositifs 2 moteur aval disposés en série en aval en amont du réchauffeur 3 atmosphérique sont par exemple chacun du type « à structure en U ». C'est-à-dire qu'ils comportent chacun un tube 42 à pulsations et un tube 32 de régénération disposés côte-à-côte, notamment parallèle et reliés fluidiquement via une de leur extrémités. Ainsi, la première extrémité 12 de chaque dispositif 2 moteur destinée à fournir des calories ou fluide du circuit de travail peut être située sur le bout des deux tubes 42, 32. De même, la seconde extrémité 22 de chaque dispositif 2 moteur destinée à recevoir des calories d'une source chaude peut être située sur l'autre bout des deux tubes 42, 32 reliés fluidiquement.

Bien entendu, tout autre type de structure peut être envisagé pour l'un ou l'autre des dispositifs 2 moteur.

De plus, et comme illustré à la figure 5, les secondes extrémités 22 des deux dispositifs 2 moteur aval peuvent être reliées à un circuit de réchauffage commun comprenant une boucle 16 de circulation d'un fluide caloporteur (munie par exemple d'une pompe 26) pour transférer sélectivement des calories d'une source chaude 6 vers la seconde extrémité 22 du dispositif 2 de travail. Comme précédemment, la source chaude peut comprendre l'un au moins parmi : l'air ambiant, un organe de réchauffage tel qu'un concentrateur solaire, ou tout autre source de calorie appropriée.

Comme illustré à la figure 5, le dispositif 2 moteur amont (situé à la sortie du réservoir 1) peut être du type à structure concentrique et à circuit de travail fermé (par exemple ave cde l'hélium pour gaz de travail). Le second dispositif 2 moteur (situé entre les deux autres dispositifs 2 moteur) est par exemple à circuit de travail fermé (avec de l'hélium pour gaz de travail) tandis que le troisième dispositif 2 de travail (situé en amont du refroidisseur 3 atmosphérique) peut être quant à lui à circuit de travail ouvert (gaz de travail identique au gaz du réservoir 1). A cet effet, et comme décrit précédemment, après passage dans le réchauffeur atmosphérique 3, le gaz vaporisé du circuit de soutirage peut communiquer (entrée et sortie) dans le circuit de travail du troisième dispositif 2 de travail via une conduite 17 d'échange et un ensemble de vanne(s) 27, 37. Comme précédemment, les vannes 27, 37 peuvent être commandées en fonction d'une mesure 18 de pression en aval sur le circuit 7 de soutirage.

De plus, le fluide de travail du second dispositif 2 de travail est relié au mécanisme 4, 5 de conversion de des oscillations de pression en énergie électrique du troisième dispositif 2 de travail. Par exemple, le fluide de travail du second dispositif 2 de travail est en liaison fluidique, via une conduite, avec la face postérieure du piston 4.

Ceci permet de transmettre les oscillations de pression du second dispositif 2 moteur au fluide de travail du troisième dispositif moteur 2 avec un déphasage. C'est-à-dire que le travail du second dispositif 2 (oscillations de pression) est utilisé pour générer des oscillations de pression dans le troisième dispositif 2 moteur via un déphasage dans le cycle de compression/détente. Ce type de fonctionnement est dit « à double effet ».

Par exemple, si l'on symbolise la génération d'oscillations dans un dispositif moteur via un piston de déplacement alternatif (cf. piston 21 figure 9) et que l'on récupère du travaille à l'autre extrémité au niveau d'un piston 4 du mécanisme de conversion, le mode double effet consiste à transmettre les oscillations d'un piston (de déplacement ou du mécanisme 5 de conversion) vers le gaz de travail ou un piston de l'autre dispositif 2 moteur. Ce transfert est réalisé avec un déphasage correspondant par exemple à un tiers ou un quart du cycle, c'est-à-dire 120° ou 90° pour un cycle de 360°.

Par exemple, le fluide stocké à une pression de 15bar et à une température de -175°C dans le réservoir peut être amené à une température de -150°C après échange thermique avec le premier dispositif 2 moteur, puis à une température de -100°C après échange thermique avec le second dispositif 2 moteur puis à une température de -20°C après échange thermique avec le troisième dispositif 2 moteur. Au final, à la sortie du réchauffeur 3 atmosphérique, le fluide peut par exemple être à l'état gazeux à une température ambiante (20°C par exemple) et une pression de l'ordre de 7bar.

La figure 6 illustre encore une autre variante d'installation de fourniture de gaz.

L'installation de la figure 6 se distingue de l'installation de la figure 5 en ce que les trois dispositifs 2 moteur sont du même type, c'est-à-dire à structure en U. De plus, les secondes extrémités 22 des trois dispositifs 2 moteur aval sont reliées à un circuit de réchauffage commun comprenant une boucle 16 de circulation d'un fluide caloporteur munie d'une pompe 26 pour transférer sélectivement des calories d'une source chaude 6 vers les secondes extrémités 22 des dispositifs 2 de travail.

De plus, le fluide de travail du premier dispositif 2 moteur est en communication fluidique avec la face postérieure du piston 4 du mécanisme 4, 5 de conversion en énergie électrique des oscillations de pression du second dispositif 2 moteur. De même, le fluide de travail du second dispositif 2 moteur est en communication fluidique avec la face postérieure du piston 4 du mécanisme 4, 5 de conversion en énergie électrique des oscillations de pression du troisième dispositif 2 moteur.

C'est-à-dire que les trois dispositifs 2 moteur fonctionnent selon un mode à double effet avec un déphasage de 120° (un tiers de cycle).

Cette architecture peut avantageusement être utilisée pour assurer un réchauffement de même nature que celui de l'installation de la figure 5 décrite ci-dessus.

La figure 7 illustre encore une autre variante d'installation de fourniture de gaz.

L'installation de la figure 7 se distingue de l'installation de la figure 4 en ce que l'unique dispositif 2 moteur de type concentrique est remplacé par trois dispositifs 2 moteur à structure en U et à cycle de travail fermé. Les secondes extrémités 22 des trois dispositifs 2 moteur sont reliées à un circuit de réchauffage commun comprenant une boucle 16 de circulation d'un fluide caloporteur munie d'une pompe 26 pour transférer sélectivement des calories d'une source chaude 6 vers les secondes extrémités 22 des dispositifs 2 de travail.

De plus, le fluide de travail du premier dispositif 2 moteur est en communication fluidique avec la face postérieure du piston 4 du mécanisme 4, 5 de conversion en énergie électrique des oscillations de pression du second dispositif 2 moteur. De même, le fluide de travail du second dispositif 2 moteur est en communication fluidique avec la face postérieure du piston 4 du mécanisme 4, 5 de conversion en énergie électrique des oscillations de pression du troisième dispositif 2 moteur. Enfin, le fluide de travail du troisième dispositif 2 moteur est en communication fluidique avec la face postérieure du piston 4 du mécanisme 4, 5 de conversion en énergie électrique des oscillations de pression du premier dispositif 2 moteur.

C'est-à-dire que les trois dispositifs 2 moteur fonctionnent selon un mode à double effet avec un déphasage de 120° (un tiers de cycle).

Cette architecture est particulièrement adaptée à produire de l'hydrogène gazeux à pression élevée (par exemple 800bar) et à température négative (par exemple -40°C à partir d'un réservoir stockant de l'hydrogène cryogénique à 5 bar et une température de -250°C environ.

La figure 8 illustre encore une autre variante d'installation de fourniture de gaz.

L'installation de la figure 8 se distingue de l'installation de la figure 7 en ce que le circuit de travail du troisième dispositif 2 moteur (en aval) communique également avec une boucle fermée de gaz de travail comprenant une pompe et un ensemble de vanne(s) par exemple deux vannes rotatives) pour générer des oscillations du fluide de travail dans le dispositif 2 moteur.

De plus, contrairement à la forme de réalisation de la figure 7, le circuit de travail du troisième dispositif 32 de travail ne communique pas avec la face antérieure d'un mécanisme de conversion 4, 5 d'un autre dispositif 2 de travail.

Dans la description qui précède, par « dispositif moteur » on désigne notamment un détendeur de type thermo-acoustique, une machine de type Stirling, une machine de type Ericsson, un refroidisseur à tube à gaz pulsé ou tout autre appareil équivalent, c'est-à-dire une machine soumettant un fluide de travail (par exemple de l'hélium), à un cycle de travail thermodynamique de type Stirling ou Ericsson dans lequel ce fluide de travail subit des variations de pression et restitue des calories de l'extérieur.

La figure 9 illustre schématiquement un dispositif moteur 2 constitué d'une machine de type Stirling utilisant un gaz de travail tel que de l'hélium à un circuit fermé. Les première 12 et seconde 22 extrémités sont situées de part et d'autre d'un tube 32 régénérateur. Les oscillations du gaz de travail sont générées dans le tube 32 régénérateur via un mécanisme symbolisé par un piston 21 entraîné dans un mouvement alternatif via un mécanisme 22. Les entrée et sorties de calories sont symbolisées des flèches au niveau des première 12 et seconde 22 extrémités. A l'autre extrémité du tube 32 régénérateur un piston 4 est couplé au circuit électromagnétique comprenant un alternateur 50 électromécanique et un convertisseur 55 de puissance électrique.

La figure 10 illustre une variante dans laquelle le dispositif moteur 2 est constitué d'une machine de type « thermo-acoustique » utilisant un gaz de travail tel que de l'hélium en circuit fermé.

Les première 12 et seconde 22 extrémités sont situées de part et d'autre d'un tube 42 à pulsations, la seconde extrémité étant située entre le tube à pulsation et le tube 32 régénérateur. La génération d'oscillations gazeuses (pulsations) dans les tubes est schématisée par une ligne de liaison fluidique entre les deux extrémités 52 du dispositif.

La variante de la figure 11 illustre un dispositif 2 moteur de type « machine Ericsson » utilisant un circuit de travail ouvert (c'est-à-dire que le gaz de travail est fourni de l'extérieur est restitué à l'extérieur de la machine). Le gaz de travail est fourni via une conduite 17 d'échange et un système de vannes 27, 37. Ce dispositif permet de récupérer l'énergie de pression du gaz sous forme de détente, en générant une oscillation de pression sur le piston 4.

La variante de la figure 12 illustre un dispositif moteur 2 constitué d'une machine de type « thermo-acoustique » utilisant un gaz de travail tel que de l'hélium en circuit ouvert, permettant à la fois de récupérer l'énergie de pression selon le processus décrit dans la figure 11, et de réchauffer du gaz dans l'échangeur 12.

Les installations et procédés décrits ci-dessus permettent une production de gaz à partir d'une réserve cryogénique tout en permettant la production simultanée d'électricité (via un mécanisme de conversion au niveau de tout ou partie des dispositifs 2 moteur) et de chauffage, pour réchauffer et vaporiser le gaz à distribuer à une température supérieure à sa température de stockage cryogénique.

## Revendications

1. Procédé de production de gaz sous pression à une température (Tf) déterminée et une pression (Tf) déterminée à partir d'un réservoir (1) de gaz liquéfié stocké à température (TO) cryogénique, dans lequel du gaz liquéfié est extrait du réservoir (1) puis est réchauffé par échange thermique avec au moins un organe (2, 3) de réchauffage, **caractérisé en ce que** le au moins un organe (2) de réchauffage comprend un dispositif (2) moteur comprenant un tube à gaz pulsé et soumettant un gaz de travail à un cycle de travail thermodynamique de type Stirling ou Ericsson, le fluide de travail générant lors de son cycle de travail des oscillations de pression dans le dispositif (2) moteur, le fluide de travail générant également lors de son cycle de travail des calories au niveau une première extrémité (12) du dispositif (2) moteur et absorbant des calories au niveau d'une seconde extrémité (22) du dispositif (2) moteur, et **en ce que** le gaz de travail est mis en liaison fluidique avec un mécanisme (4, 5) de conversion en énergie électrique desdites oscillations de pression du gaz de travail.

2. Procédé selon la revendication 1, **caractérisé en ce que** l'organe (2) de réchauffage comprend un dispositif (2) moteur soumettant le gaz de travail à un cycle de travail thermodynamique de type Stirling ou Ericsson ouvert, c'est-à-dire que le gaz de travail est alimenté en gaz issu du réservoir (1) et au moins une partie du gaz sous pression produit à une température (Tf) déterminée et une pression (Tf) déterminée provient du gaz de travail du dispositif (2) moteur.

3. Procédé selon la revendication 1 ou 2, **caractérisé en ce que** l'organe (2) de réchauffage comprend un dispositif (2) moteur soumettant le gaz de travail à un cycle de travail thermodynamique de type Stirling ou Ericsson fermé c'est-à-dire que le gaz de travail n'est pas alimenté en gaz provenant du réservoir (1) et le dispositif moteur ne cède pas de gaz de travail pour la production de gaz sous pression à la température (Tf) déterminée et à la pression (Tf) déterminée

4. Procédé selon l'une quelconque des revendications 1 à 3, **caractérisé en ce que** le gaz liquéfié extrait du réservoir (1) est réchauffé par échange thermique avec la première extrémité (12) du dispositif (2) moteur.

5. Procédé selon l'une quelconque des revendications 1 à 4, **caractérisé en ce que** le dispositif (2) moteur comprend au moins l'un parmi : un détendeur de type thermo-acoustique, une machine ou moteur Stirling, une machine ou moteur Ericsson.

6. Procédé selon l'une quelconque des revendications 1 à 5, **caractérisé en ce que** des calories sont fournies au dispositif de travail (2) au niveau de la seconde extrémité (22) du dispositif (2) moteur à partir d'une source chaude comprenant l'un au moins parmi : l'air ambiant, un organe (6) de réchauffage.

7. Procédé selon l'une quelconque des revendications 1 à 6, **caractérisé en ce que** le gaz liquéfié est sélectivement pressurisé à une pression déterminé comprise entre 5 et 15bar avant son échange thermique avec le au moins un organe (2, 3) de réchauffage.

8. Installation de production de gaz sous pression à une température (Tf) déterminée et une pression (Pf) déterminée comprenant un réservoir (1) de gaz liquéfié stocké à température (TO) cryogénique, un circuit (7) de soutirage de fluide du réservoir (1) comprenant au moins un organe (2, 3) de réchauffage, **caractérisée en ce que** le au moins un organe de réchauffage comprend un dispositif (2) moteur comprenant un tube à gaz pulsé et soumettant un gaz de travail à un cycle de travail thermodynamique de type Stirling ou Ericsson, le fluide de travail générant lors de son cycle de travail des oscillations de pression dans le dispositif (2) moteur, le fluide de travail générant par ailleurs lors de son cycle de travail des calories au niveau une première extrémité (12) du dispositif (2) moteur et absorbant des calories au niveau d'une seconde extrémité (22) du dispositif (2) moteur, le circuit (7) de soutirage de fluide du réservoir (1) comportant une portion en échange thermique avec la première extrémité (12) du dispositif (2) moteur, et **en ce que** l'installation comprend, mis en relation fluidique avec le gaz de travail, un mécanisme (4, 5) de conversion en énergie électrique des desdites oscillations de pression du gaz de travail.

9. Installation selon la revendication 8, **caractérisée en ce que** le dispositif (2) moteur comprend au moins l'un parmi : un détendeur de type thermo-acoustique, une machine de type Stirling, une machine de type Ericsson, un refroidisseur à tube à gaz pulsé.

10. Installation selon la revendication 8 ou 9, **caractérisée en ce que** l'organe de réchauffage comprend un dispositif (2) moteur soumettant le gaz de travail à un cycle de travail thermodynamique de type Stirling ou Ericsson fermé, c'est-à-dire que le gaz de travail ne communique pas fluidiquement avec le gaz du circuit (7) de soutirage.

11. Installation selon l'une quelconque des revendications 8 à 10, **caractérisée en ce que** l'organe de réchauffage comprend un dispositif (2) moteur soumettant le gaz de travail à un cycle de travail thermodynamique de type Stirling ou Ericsson ouvert, c'est-à-dire que le circuit (7) de soutirage comprend au moins une conduite (17) d'échange mettant sélectivement en communication le circuit (7) de soutirage avec le dispositif (2) moteur pour fournir et prélever du gaz de travail.

12. Installation selon l'une quelconque des revendications 8 à 11, **caractérisée en ce qu'**elle comprend un circuit (16) de réchauffage en échange thermique d'une part avec la seconde extrémité (22) du dispositif (2) moteur et d'autre part avec une source chaude (6) pour transférer sélectivement des calories de la source chaude (6) vers la seconde extrémité (22) du dispositif (2) de travail, la source chaude comprenant l'un au moins parmi : l'air ambiant, un organe de réchauffage.

13. Installation selon l'une quelconque des revendications 8 à 12, **caractérisée en ce que** le circuit (7) de soutirage comprend un organe (3) de réchauffage supplémentaire distinct du dispositif (2) moteur tel qu'un vaporiseur ou un réchauffeur atmosphérique.

14. Installation selon l'une quelconque des revendications 8 à 13, **caractérisée en ce que** le circuit (7) de soutirage comprend un détendeur (8) de pression pour abaisser la pression du gaz à une valeur déterminée fixe ou réglable.

15. Installation selon l'une quelconque des revendications 8 à 14, **caractérisée en ce que** l'organe (2) de réchauffage comprend plusieurs dispositifs (2) moteur disposés en série soumettant chacun du gaz de travail à un cycle de travail thermodynamique de type Stirling ou Ericsson respectif de type ouvert ou fermé.
